# EUROPEAN PATENT APPLICATION

(11) **EP 4 283 033 A1**
(43) Date of publication of application: **29.11.2023**
(21) Application number: 23175642.0
(22) Date of filing: 26.05.2023
(51) Int. Cl.: D04H 1/425, D04H 1/732, D04H 1/736, D21F 7/00, D21F 9/00, D01G 11/00, D01G 13/00

(54) **SHEET MANUFACTURING APPARATUS**

(30) Priority: 26.05.2022 JP 2022085851
(71) Applicant: Seiko Epson Corporation, Tokyo 160-8801 (JP)
(72) Inventor: NAKATA, Hirofumi, Suwa-shi, 392-8502 (JP); KATO, Yuka, Suwa-shi, 392-8502 (JP); YAMAGA, Hirokazu, Suwa-shi, 392-8502 (JP); FUJITA, Shigeo, Suwa-shi, 392-8502 (JP); YAMASAKI, Keigo, Suwa-shi, 392-8502 (JP)
(74) Representative: Lewis Silkin LLP

(57) **Abstract**

A sheet manufacturing apparatus includes a pipe that supplies a material containing fibers, a supply direction change section that changes a movement direction of the material supplied from the pipe, a reducer section that is disposed downstream of the supply direction change section and decreases a movement speed of the material, and an accumulation section that is disposed downstream of the reducer section and accumulates the material to form a web.

## Description

The present application is based on, and claims priority from JP Application Serial Number 2022-085851, filed May 26, 2022, the disclosure of which is hereby incorporated by reference herein in its entirety.

### BACKGROUND

### 1. Technical Field

The present disclosure relates to a sheet manufacturing apparatus.

### 2. Related Art

In the related art, a sheet manufacturing apparatus that manufactures a sheet from a web on which fibers are accumulated has been known. For example, JP-A-2020-84395 discloses a fiber material accumulation apparatus that unravels material, such as fibers, by rotation of a rotating body and then accumulates the unraveled material.

However, in the apparatus disclosed in JP-A-2020-84395, there is a problem that it is difficult to reduce a variation in a thickness of the web. Specifically, when a direction along a rotation axis of the rotating body of a dispersion section is defined as a width direction of the rotating body, the material is supplied from above the center in the width direction of the rotating body. Therefore, when the web having a wide width direction is formed, the variation in the thickness tends to occur in the width direction. When the variation in the thickness of the web is remarkable, there is a possibility that a thickness of a sheet to be manufactured is uneven and it is difficult to improve a quality. That is, there has been a demand for a sheet manufacturing apparatus that reduces the variation in the thickness of the web.

### SUMMARY

According to an aspect of the present disclosure, a sheet manufacturing apparatus includes a supply section that supplies a material containing fibers, a supply direction change section that changes a movement direction of the material supplied from the supply section, a reducer section that is disposed downstream of the supply direction change section and decreases a movement speed of the material, and an accumulation section that is disposed downstream of the reducer section and accumulates the material to form a web.

### BRIEF DESCRIPTION OF THE DRAWINGS

FIG. 1 is a schematic diagram showing a configuration of a sheet manufacturing apparatus according to an embodiment.
FIG. 2 is a perspective view showing configurations of a supply member, a forming section, and the like.
FIG. 3 is a side view showing an appearance of the supply member.
FIG. 4 is a schematic cross-sectional view showing actions of the supply member and the forming section.
FIG. 5 is a perspective view showing a configuration of a rotating member.
FIG. 6 is a block diagram showing a configuration of a control section.
FIG. 7 is a flowchart showing a method of controlling an air blowing section by the control section.
FIG. 8 is a flowchart showing the method of controlling the air blowing section by the control section.

### DESCRIPTION OF EXEMPLARY EMBODIMENTS

In an embodiment which will be described below, a sheet manufacturing apparatus that manufactures a sheet from a web formed by a dry process will be described as an example, and the description will be made with reference to the drawings. In each of the following drawings, XYZ axes, which are coordinate axes orthogonal to each other, are attached as necessary, and a direction indicated by an arrow is defined as a + direction, and a direction opposite to the + direction is defined as a - direction. A -Z direction coincides with a vertical direction. A +Z direction may be referred to as an upward direction, and the -Z direction may be referred to as a downward direction.

In the sheet manufacturing apparatus, the web, or the like, a direction along a Y axis is a width direction, and a direction along a Z axis is a thickness direction. In addition, in the sheet manufacturing apparatus, a destination of a transport direction of a raw material, the web, or the like may be referred to as downstream, and a side that goes back in the transport direction may be referred to as upstream. For convenience of illustration, a size of each member is different from an actual size.

### 1. Sheet Manufacturing Apparatus

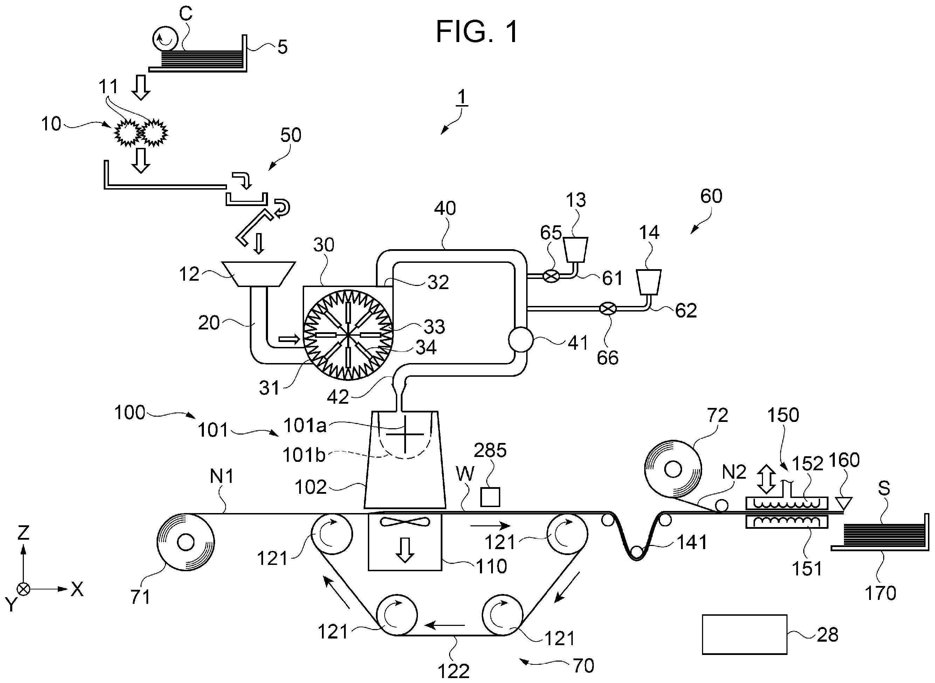

As shown in FIG. 1, a sheet manufacturing apparatus 1 according to the present embodiment includes, from an upstream part toward a downstream part, a material supply section 5, a crushing section 10, a defibration section 30, a pipe 40, which is a supply section, a supply member 42, a forming section 100, a web transport section 70, a molding section 150, and a cutting section 160.

In addition, the sheet manufacturing apparatus 1 includes a control section 28 that integrally controls the operation of each of the configurations. The sheet manufacturing apparatus 1 manufactures a sheet S that is a molded product having a sheet shape. A thickness of the sheet S is not particularly limited, and may be a thickness larger than a thickness of copy paper by several cm or more. In the present specification, the thickness is a distance in a direction along the Z axis.

The material supply section 5 supplies a raw material C to the crushing section 10. The material supply section 5 includes an automatic feeding mechanism, and the raw material C is continuously and automatically charged into the crushing section 10. The raw material C is a material containing fibers. Examples of the material containing fibers include paper, corrugated board, pulp, pulp sheet, sawdust, shavings, wood, and fabric.

By defibrating such a raw material C by the defibration section 30, which will be described below, cellulose fibers are obtained as a defibrated material. The cellulose fibers are fibers contained in plant fibers such as wood and are carbohydrates. The cellulose fiber is one of the main components of the sheet S manufactured by the sheet manufacturing apparatus 1. The fibers applied to the sheet S may include synthetic fibers, such as polypropylene, polyester, and polyurethane, in addition to the cellulose fibers. From the viewpoint of reducing the environmental load, it is preferable to use fibers derived from natural products, such as the cellulose fibers.

The crushing section 10 shreds the raw material C supplied from the material supply section 5 in the air, such as the atmosphere. The crushing section 10 has a crushing blade 11. The crushing section 10 is, for example, a shredder or a cutter mill. The raw material C is shredded by the crushing blade 11 into fragments. A planar shape of the fragment is, for example, several mm square or irregular. The fragments are collected in a fixed-quantity material supply section 50.

The fixed-quantity material supply section 50 weighs the fragments and supplies the fragments to a hopper 12 in a fixed quantity. The fixed-quantity material supply section 50 is, for example, a vibration feeder. The fragments supplied to the hopper 12 are transported to an introduction port 31 of the defibration section 30 through the pipe 20.

The defibration section 30 includes an introduction port 31, a discharge port 32, a stator 33, and a rotor 34. The defibration section 30 defibrates the fragments of the raw material C by a dry method to produce the fibers. The fragments of the raw material C are introduced into an inside of the defibration section 30 through the introduction port 31 by a suction airflow of an air blowing section 41, which will be described below. In the present specification, the dry method means that it is carried out in the air, such as the atmosphere, not in the liquid.

The stator 33 and the rotor 34 are disposed inside the defibration section 30. The stator 33 has an inner side surface having a substantially cylindrical shape. The rotor 34 rotates along the inner side surface of the stator 33. The fragments of the raw material C are interposed between the stator 33 and the rotor 34, and are defibrated by a shearing force generated between the stator 33 and the rotor 34 to be the fibers. The fibers are sucked into the pipe 40 from the discharge port 32 of the defibration section 30 by the suction airflow.

It is preferable that the fibers produced by the defibration have a fiber length of 1.0 mm or more. Accordingly, since the fibers are not excessively shortened, a mechanical strength of the sheet S is improved. The fiber length is obtained by a method conforming to ISO 16065-2: 2007.

The pipe 40 communicates with the inside of the defibration section 30 and an inside of the supply member 42. The pipe 40 is provided with a mixing section 60 and the air blowing section 41. The mixing section 60 is disposed upstream of the air blowing section 41. The pipe 40 supplies a mixture, which is a material containing the fibers and will be described below, to the supply member 42 by a downstream airflow generated by the air blowing section 41.

The mixing section 60 includes hoppers 13 and 14, supply pipes 61 and 62, and valves 65 and 66. The mixing section 60 mixes a binder and an additive with the material, such as the fibers, transported in the air of the pipe 40. As a result, the mixture is produced.

The hopper 13 supplies the binder into the pipe 40. The hopper 13 communicates with an inside of the pipe 40 through the supply pipe 61. The valve 65 is disposed between the hopper 13 and the pipe 40 in the supply pipe 61. The valve 65 adjusts the weight of the binder supplied from the hopper 13 to the pipe 40. The valve 65 adjusts a mixing ratio between the fibers and the binder. The binder may be supplied as a powder, or may be melted and supplied.

The binder binds the fibers together. As the binder, a resin having thermal plasticity or thermosetting property is used. Examples of the resin include resins derived from natural products, such as shellac, pine resin, dammar, polylactic acid, polybutylene succinate derived from a plant, polyethylene derived from a plant, and PHBH (registered trademark) (poly(3-hydroxybutyrate-co-3-hydroxyhexanoate)) manufactured by KANEKA CORPORATION, and known synthetic resins. As the binder, one of these types may be used alone, or in combination of two or more types. From the viewpoint of reducing the environmental load, it is preferable that the binder is a resin derived from natural products.

The hopper 14 supplies the additive into the pipe 40. The hopper 14 communicates with the inside of the pipe 40 through the supply pipe 62. The valve 66 is disposed between the hopper 14 and the pipe 40 in the supply pipe 62. The valve 66 adjusts the weight of the additive supplied from the hopper 14 to the pipe 40. The valve 66 adjusts a mixing ratio of the additive to the fibers and the binder.

Examples of the additive include a colorant, a flame retardant, an antioxidant, an ultraviolet absorber, an aggregation inhibitor, an antibacterial agent, an antifungal agent, a wax, and a mold release agent. The additive is not an essential component in the sheet S, and the hopper 14, the supply pipe 62, or the like may be omitted. In addition, the additive may be mixed with the binder in advance and supplied from the hopper 13.

The air blowing section 41 is an airflow generator, such as a blower. The air blowing section 41 transports the material containing the fibers to the downstream pipe 40 by the downstream airflow. In addition to the airflow, the air blowing section 41 also generates the suction airflow for sucking the fibers from the defibration section 30. A volumetric flow rate of the airflow going downstream of the air blowing section 41 is controlled by the control section 28. The volumetric flow rate can be changed, for example, by a rotation speed of an air blowing fan provided in the air blowing section 41. The control of the air blowing section 41 by the control section 28 will be described below.

The fibers, the binder, and the like are mixed while being transported to the supply member 42 in the pipe 40 to form the mixture. The mixture is introduced into the supply member 42 that couples a downstream end of the pipe 40 to the forming section 100.

The supply member 42 rectifies a flow of the mixture supplied from the pipe 40 and guides the mixture to the forming section 100. The supply member 42 is coupled to a dispersion section 101 of the forming section 100. The detailed configuration and function of the supply member 42 will be described below. The mixture flows into an inside of the dispersion section 101 from the supply member 42.

The forming section 100 forms the web W by accumulating the mixture containing the fibers, the binder, and the like in the air. The web W has a wide band shape in the direction along the Y axis. The forming section 100 includes the dispersion section 101 and an accumulation section 102. The dispersion section 101 is disposed inside the accumulation section 102. The inside of the dispersion section 101 communicates with the pipe 40 through the supply member 42. The web transport section 70 is disposed below the accumulation section 102.

The dispersion section 101 includes a rotating member 101a and a drum section 101b for accommodating the rotating member 101a. The forming section 100 takes the mixture from the supply member 42 into the inside of the dispersion section 101, and accumulates the mixture on a mesh belt 122 of the web transport section 70 by a dry method.

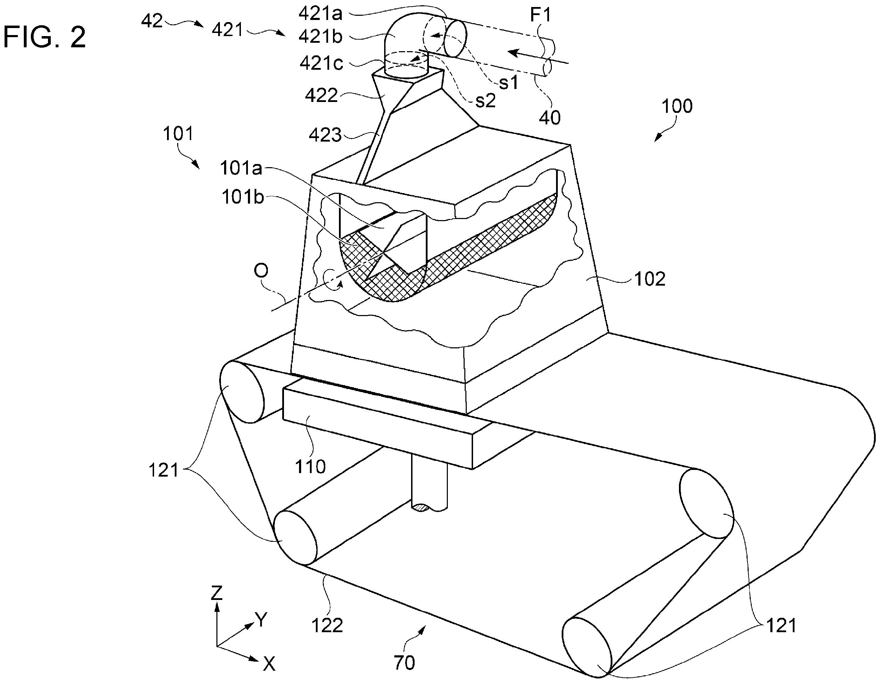

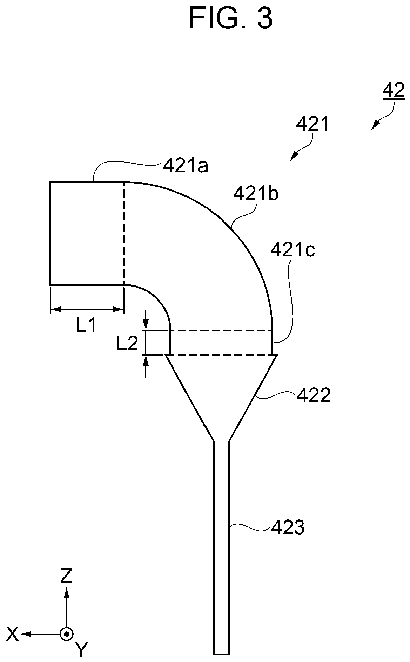

As shown in FIG. 2 and FIG. 3, the supply member 42 is a member having a substantially triangular shape in a side view from a +X direction. The supply member 42 includes a supply direction change section 421, a reducer section 422, and a duct section 423. The mixture supplied from the pipe 40 flows into the supply member 42 by a flow F1. A traveling direction of the flow F1 is a substantially -X direction.

In the supply member 42, the supply direction change section 421, the reducer section 422, and the duct section 423 are disposed in the above-described order from the upstream part toward the downstream part. That is, the reducer section 422 is disposed downstream of the supply direction change section 421. The accumulation section 102 of the forming section 100 is disposed downstream of the reducer section 422 through the duct section 423.

The supply direction change section 421 is coupled to an end portion of the pipe 40 in the -X direction. The supply direction change section 421 has an upstream straight pipe portion 421a, a curved portion 421b, and a downstream straight pipe portion 421c. In the supply direction change section 421, the upstream straight pipe portion 421a, the curved portion 421b, and the downstream straight pipe portion 421c are disposed in the above-described order from the upstream part toward the downstream part.

The supply direction change section 421 is a so-called L-shaped pipe joint, and couples the pipe 40 and the reducer section 422. In the supply direction change section 421, an inner surface on which the mixture is moved has a circular cross section orthogonal to a movement direction of the mixture. In the supply direction change section 421, the mixture supplied from the pipe 40 is moved on the inner surface. As a result, the movement direction of the mixture is changed.

The upstream straight pipe portion 421a has a circular cross section along a YZ plane and a tubular shape in a length direction along the X axis. The upstream straight pipe portion 421a has an end portion in the +X direction, which is coupled to an end portion of the pipe 40 in the - X direction, and an end portion in the -X direction, which is coupled to an end portion of the curved portion 421b in the +X direction. Here, a section length of an upstream part with respect to the curved portion 421b of the supply direction change section 421, that is, a distance of the upstream straight pipe portion 421a along the X axis is defined as a length L1.

The curved portion 421b has a shape obtained by cutting out a part of an annulus in a side view from a +Y direction. An inner side of the curved portion 421b has a circular cross section and is gently curved in order to change the movement direction without interfering with the movement of the mixture. An end portion of the curved portion 421b in the -Z direction is coupled to the downstream straight pipe portion 421c. Since the supply direction change section 421 has the curved portion 421b, a degree of freedom in handling of the pipe from the pipe 40 to the forming section 100 is improved. A shape of the curved portion 421b is not limited to the above.

It is preferable that, in the curved portion 421b, a cross-sectional area s2 along an XY plane of the region coupled to the downstream straight pipe portion 421c downstream of the curved portion 421b is 1 time or more and 5 times or less as large as a cross-sectional area s1 along the YZ plane of the region coupled to the upstream straight pipe portion 421a upstream of the curved portion 421b. As a result, an inner diameter of the curved portion 421b is not reduced along the movement direction of the mixture, so that an increase in the movement speed of the mixture is suppressed. In the present embodiment, a ratio between the cross-sectional area s1 to the cross-sectional area s2 is set to 1 time.

The downstream straight pipe portion 421c has a circular cross section along the XY plane and a tubular shape in the length direction along the Z axis. In the downstream straight pipe portion 421c, the end portion in the +Z direction is coupled to the end portion of the curved portion 421b in the -Z direction, and the end portion in the -Z direction is coupled to an end portion in the +Z direction of the reducer section 422. Here, a section length of a downstream part with respect to the curved portion 421b, that is, a distance along the Z axis of the downstream straight pipe portion 421c is defined as a length L2.

It is preferable that the length L1 is 6 times or more and 10 times or less as large as the length L2. Accordingly, the turbulence of the flow of the mixture can be further rectified in the downstream part with respect to the curved portion 421b. In addition, the size of the supply direction change section 421 can be reduced.

It is preferable that, in the supply direction change section 421, the distance that the mixture is moved from the curved portion 421b, that is, the length L2 is 6 times or more and 10 times or less as large as a diameter of an inner surface of the curved portion 421b. Accordingly, it is possible to secure a distance for the mixture to move and to rectify the flow of the mixture. In addition, by not making the length L2 excessively long, the size of the supply direction change section 421 can be reduced.

The reducer section 422 is coupled to the end portion of the downstream straight pipe portion 421c in the -Z direction. The reducer section 422 has a substantially trapezoidal shape in a side view from the +X direction, and an upper bottom in the +Z direction is shorter than a lower bottom in the -Z direction. In addition, the reducer section 422 has a substantially triangular shape in a side view from the -Y direction, and a bottom side is positioned in the +Z direction. That is, on an inner side of the reducer section 422, the width in the direction along the Y axis is increased and the width in the direction along the X axis is decreased from the upstream part toward the downstream part. Due to the shape, the reducer section 422 decreases the movement speed of the mixture that is moved from the supply direction change section 421 and feeds the mixture to the duct section 423.

The duct section 423 is provided below the reducer section 422. The duct section 423 extends downward and communicates with the inside of the dispersion section 101 of the forming section 100. The duct section 423 has a shape in which the width in the direction along the X axis is constant in a side view from the +Y direction and is gradually widened downward in a side view from the +X direction. As a result, the mixture passes through the space in the duct section 423 in which the width in the direction along the X axis is constant and narrow and the width in the direction along the Y axis is gradually wider.

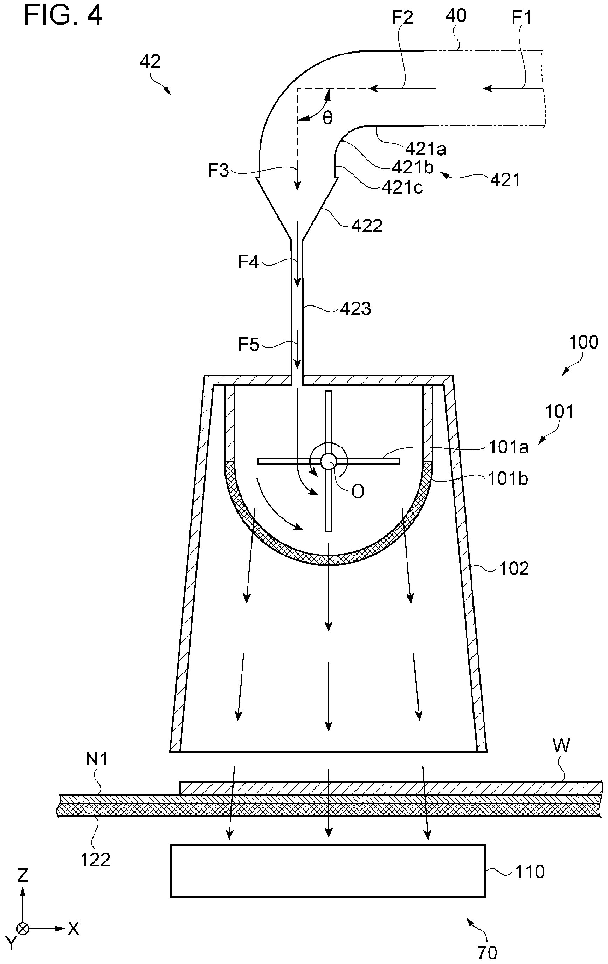

As shown in FIG. 4, the flow F1 of the mixture that flows into the supply member 42 from the pipe 40 becomes a flow F2 in the supply direction change section 421. The flow F2 is changed in the movement direction along the inner surface of the curved portion 421b to become a flow F3. That is, in the supply direction change section 421, an angle θ formed by the flow F2, which is the movement direction of the mixture in the upstream part, and the flow F3, which is the movement direction of the mixture in the downstream part, is 90° or more. As a result, since the movement direction of the mixture is not excessively curved, it is possible to suppress an increase in a flow path resistance in the supply direction change section 421.

The flow F3 travels from the space inside the reducer section 422 to the duct section 423 to be increased in speed to become a flow F4.

As described above, the duct section 423 has a shape that is widened downward in a side view from the +X direction. Therefore, the flow F4 is gradually decreased in speed as the flow F4 travels downward to become a flow F5. The flow F5 travels to the inside of the dispersion section 101 of the forming section 100 that communicates with the duct section 423. In FIG. 4, the approximate speed levels of the respective flows are reflected in the lengths of the respective arrows, such as the flows F1, F2, F3, F4, and F5. That is, the arrow is longer as the speed is higher.

The inside of the supply member 42 communicates with an inside of the drum section 101b of the dispersion section 101. The drum section 101b is a member having a substantially columnar shape, and a height direction of the substantially columnar shape is along the Y axis. A lower part of the drum section 101b is formed of a metal mesh. The mesh of the metal mesh allows the fibers, the binder, or the like contained in the mixture to pass through.

The rotating member 101a is a + shaped member in a side view from a -Y direction. The rotating member 101a includes a plurality of blade portions having a plurality of opening portions, which will be described below. Although not shown, the rotating member 101a rotates around a rotation axis O as the rotation center along the Y axis by driving a motor or the like while being supported by a support portion.

The accumulation section 102 is a member having a substantially box shape. The accumulation section 102 is disposed downstream of the reducer section 422. In the accumulation section 102, the supply member 42 is disposed above an upper surface, and the dispersion section 101 is disposed on an inner side of the upper surface. A region corresponding to a bottom surface of the accumulation section 102 is opened downward. The dispersion section 101 is inside the accumulation section 102 and faces an upper surface of the mesh belt 122 of the web transport section 70. The accumulation section 102 is formed of a resin or a metal, for example.

The mixture (not shown) is introduced into the inside of the supply member 42 from the pipe 40 by the flow F1 along the -X direction, and reaches the inside of the dispersion section 101 through the supply member 42. The mixture is unraveled by passing through the opening portion, which will be described below, in the rotating member 101a that rotates or between the rotating member 101a and the drum section 101b. A plurality of fibers in the mixture are released from an entangled state, separated into a single body, and pass through the mesh of the drum section 101b. As a result, the dispersion section 101 disperses the fibers, the binder, and the like contained in the mixture into the air inside the accumulation section 102.

The mixture is discharged from the inside of the dispersion section 101 into the air inside the accumulation section 102, and is guided above the mesh belt 122 by gravity and a suction force of a suction mechanism 110. Therefore, the mixture is accumulated on the upper surface of the mesh belt 122 through a first base material N1, which will be described below. That is, the accumulation section 102 accumulates the mixture containing the dispersed fibers to form the web W.

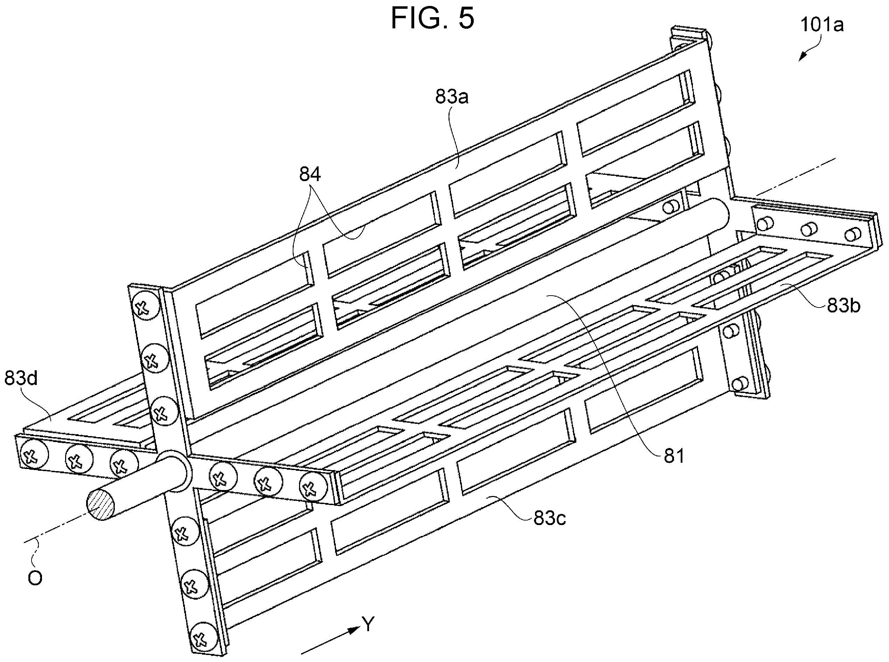

As shown in FIG. 5, the rotating member 101a includes a rotating shaft portion 81 and four blade portions 83a, 83b, 83c, and 83d. The rotating shaft portion 81 is a member having a cylinder shape, and a height direction of the cylinder is disposed along the Y axis. A central axis of the rotating shaft portion 81 coincides with the rotation axis O of the rotating member 101a. The blade portions 83a, 83b, 83c, and 83d are attached to the rotating shaft portion 81 radially from the rotating shaft portion 81 in a side view from the -Y direction.

In the following description, the blade portions 83a, 83b, 83c, and 83d may be collectively and simply referred to as the blade portion 83. The rotating member 101a of the present embodiment includes the four blade portions 83a, 83b, 83c, and 83d, but the number of the blade portions 83 is not limited to this.

The blade portion 83 is a plate-shaped member having a substantially oblong shape, and each long side is disposed along the rotating shaft portion 81. The blade portion 83 has an end portion in the +Y direction and an end portion in the -Y direction which are attached to the rotating shaft portion 81 through a + shaped member (not shown). There is a gap between each long side of each blade portion 83 on the rotating shaft portion 81 side and the rotating shaft portion 81. The blade portion 83 is formed of a resin or a metal, for example.

Here, the blade portions 83a, 83b, 83c, and 83d have the configurations that are rotationally symmetric with respect to the rotation axis O. Therefore, the following description will be made only to the blade portion 83a, and the descriptions of the other blade portions 83b, 83c, and 83d will be omitted.

The blade portion 83a includes the plurality of opening portions 84. Specifically, the plurality of opening portions 84 are provided in a matrix of four rows in the direction along the Y axis and two rows in a radiation direction from the rotation axis O. Each opening portion 84 has a substantially oblong shape with a long side along the Y axis.

Returning to FIG. 1, the web transport section 70 includes the mesh belt 122 and the suction mechanism 110. The mesh belt 122 is an endless belt and is stretched by four stretch rollers 121.

The mesh belt 122 has a strength capable of holding the web W and the like without interfering with the suction by the suction mechanism 110. The mesh belt 122 is formed of a resin or a metal, for example. A hole diameter of the mesh included in the mesh belt 122 is not particularly limited, but is desirably 60 µm or more and 125 µm or less.

At least one of the four stretch rollers 121 is rotationally driven by a motor (not shown). The upper surface of the mesh belt 122 is moved downstream due to the rotation of the stretch roller 121. Stated another way, the mesh belt 122 moves rotationally clockwise in FIG. 1. By the mesh belt 122 moving rotationally, the first base material N1 and the web W, which will be described below, are transported downstream.

A base material supply section 71 is disposed in the -X direction of the web transport section 70. The base material supply section 71 rotatably supports the first base material N1 having a roll shape. The first base material N1 is continuously supplied from the base material supply section 71 to the upper surface of the mesh belt 122.

The first base material N1 interposes the web W with a second base material N2, which will be described below. For example, for the first base material N1 and the second base material N2, a woven fabric or a non-woven fabric is applied. It is preferable that the first base material N1 has a configuration that does not interfere with the suction of the suction mechanism 110. For example, for the first base material N1 and the second base material N2, a polyester long fiber nonwoven fabric manufactured by a spunbond method is applied.

The sheet S is formed by laminating the first base material N1, the web W, and the second base material N2, so that the mechanical strength is improved. In the sheet S, the first base material N1 and the second base material N2 are not essential configurations, and any one or both thereof may be omitted.

When the base material supply section 71 supplies the first base material N1 to the mesh belt 122, the first base material N1 is transported on the mesh belt 122 in the +X direction. In the first base material N1 while being transported, the mixture is fallen from the accumulation section 102 and accumulated on the upper surface. As a result, the web W is continuously formed on the upper surface of the first base material N1. The mesh belt 122 transports the web W downstream together with the first base material N1.

The suction mechanism 110 is disposed below the dispersion section 101. The suction mechanism 110 promotes the accumulation of the mixture on the mesh belt 122. The suction mechanism 110 sucks the air into the accumulation section 102 through a plurality of holes included in the mesh belt 122 and the first base material N1. The plurality of holes in the mesh belt 122 and the first base material N1 allow the air to pass through, and make it difficult for the fibers, the binder, or the like contained in the mixture to pass through. The mixture discharged from the dispersion section 101 to an inner side of the accumulation section 102 is sucked downward together with the air. A known suction device, such as a blower, is adopted for the suction mechanism 110.

As a result, the mixture in the accumulation section 102 is accumulated on the upper surface of the first base material N1 by the suction force of the suction mechanism 110 in addition to the gravity, to form the web W. The web W contains a relatively large amount of the air and is soft and swollen. By the mesh belt 122, the web W is transported downstream together with the first base material N1.

A sensor section 285 is provided at a position facing the web W above the mesh belt 122 in the +X direction of the accumulation section 102. The sensor section 285 is provided in the control section 28.

The sensor section 285 detects an accumulation state of the mixture containing the fibers in the accumulation section 102. Specifically, the sensor section 285 measures the thickness of the web W in a noncontact manner. Although not shown, a plurality of sensor sections 285 are arranged along the Y axis. The sensor section 285 measures the thickness of the web W at a plurality of locations in the width direction of the web W, that is, in the direction along the Y axis. The thickness of the web W is measured at the plurality of locations by the sensor section 285 while being transported downstream.

Here, the mixture that forms the web W is dispersed in the dispersion section 101 which is relatively long in the direction along the Y axis. Therefore, in the web W formed in the related art, the variation in the thickness is likely to occur in the direction along the Y axis.

On the other hand, the sheet manufacturing apparatus 1 includes the supply member 42. Therefore, the variation in the thickness of the web W in the direction along the Y axis can be reduced. Additionally, in the sheet manufacturing apparatus 1, the thickness of the web W measured by the plurality of sensor sections 285 is operated by the control section 28. The volumetric flow rate of the airflow generated by the air blowing section 41 is adjusted from the operation result or the like. As a result, the variation in the thickness is further reduced. Details of the adjustment of the volumetric flow rate will be described below.

For the sensor section 285a, a known sensor can be applied. The sensor section 285 is an optical distance sensor, for example.

A humidifier may be disposed downstream of the sensor section 285 to spray water onto the web W on the mesh belt 122 to humidify the web W. As a result, scattering of the fibers, the binder, or the like contained in the web W can be suppressed. In addition, the water used for the humidification may be impregnated with a water-soluble additive or the like, and the web W may be impregnated with the additive in parallel with the humidification.

A dancer roller 141 is disposed downstream of the web transport section 70. The web W is peeled from the most downstream stretch roller 121, and then pulled into the dancer roller 141. The dancer roller 141 secures a processing time on the downstream part. Specifically, molding in the molding section 150 is a batch process. Therefore, the dancer roller 141 is moved up and down with respect to the web W continuously transported from the accumulation section 102, and a time for reaching the molding section 150 is delayed.

The base material supply section 72 is disposed downstream of the dancer roller 141 and upstream of the molding section 150. The base material supply section 72 rotatably supports the second base material N2 having a roll shape. The second base material N2 is continuously supplied from the base material supply section 72 to the upper surface of the web W. As a result, the web W is fed out to the molding section 150 in a state of being interposed between the lower first base material N1 and the upper second base material N2.

The molding section 150 is a heat pressing device, and includes an upper substrate 152 and a lower substrate 151. The molding section 150 molds the first base material N1, the web W, and the second base material N2 into the sheet S having a continuous paper shape. The upper substrate 152 and the lower substrate 151 are pressurized with the web W interposed therebetween, and are heated by a built-in heater.

The web W is compressed from above and below by the pressurization to be increased in the density, and the binder is melted by the heating and spreads wet between the fibers. When the heating ends in this state and the binder is solidified, the fibers are bound to each other by the binder. As a result, the sheet S having a continuous paper shape, which is composed of three layers of the first base material N1, the web W, and the second base material N2, is molded. The sheet S having a continuous paper shape proceeds to the downstream cutting section 160.

In the molding section 150, instead of the heat pressing device, a heating roller and a pressurization roller may be used for continuous molding. In this case, the dancer roller 141 may be omitted.

The cutting section 160 cuts the sheet S from a continuous paper shape to a single paper shape. Although not shown, the cutting section 160 includes a vertical blade and a horizontal blade. The vertical blade and the horizontal blade are rotary cutters, for example. In addition, an ultrasound cutter or the like may be used instead of the rotary cutter.

The vertical blade cuts the sheet S having a continuous paper shape in a direction along the traveling direction. The horizontal blade cuts the sheet S having a continuous paper shape in a direction intersecting the traveling direction. The sheet S is processed into a substantially rectangular single paper shape and accommodated in a tray 170. In this way, the sheet S is manufactured.

Examples of the use of the sheet S include a cushioning material, a heat insulating material, a sound absorbing material, and a liquid absorbing material. The sheet S is not limited to a relatively thin sheet shape, and may be a plate shape, a relatively thick block shape, and the like. Unevenness or the like may be formed on the sheet S by secondary processing.

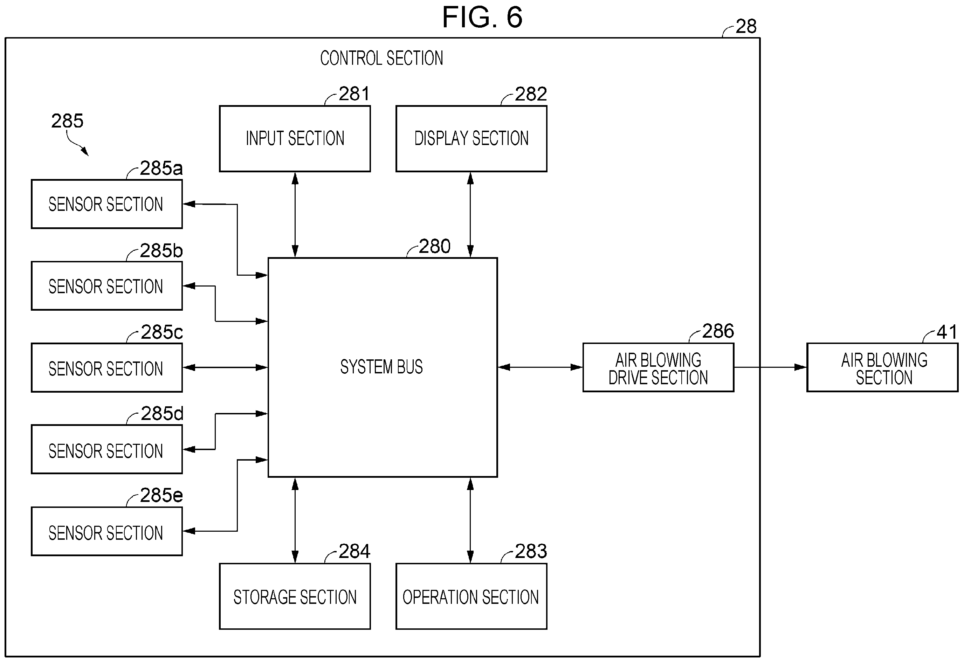

As shown in FIG. 6, the control section 28 includes a system bus 280, an input section 281, a display section 282, an operation section 283, a storage section 284, the sensor section 285, and an air blowing drive section 286. These configurations are electrically coupled to each other through the system bus 280. The control section 28 is provided on, for example, a main substrate of the sheet manufacturing apparatus 1.

The sensor section 285 includes a plurality of sensor sections 285a, 285b, 285c, 285d, and 285e. The sensor section 285 detects the accumulation state of the fibers of the web W in the accumulation section 102. Specifically, the five sensor sections 285a, 285b, 285c, 285d, and 285e are arranged in this order from the -Y direction to the +Y direction along the Y axis. Each of the five sensor sections 285a, 285b, 285c, 285d, and 285e measures the thickness of the corresponding region of the web W. By comparing the thicknesses measured by the sensor sections 285a, 285b, 285c, 285d, and 285e, the variation in the thickness of the web W in the width direction is clear.

The measurement of the thickness of the web W by the sensor section 285 may be performed with respect to the formed web W continuously, intermittently, or at any timing. The number of the sensor sections 285 is not limited to five.

The air blowing drive section 286 is electrically coupled to the air blowing section 41. The air blowing drive section 286 drives the air blowing section 41. The volumetric flow rate of the airflow generated in the pipe 40 by the air blowing section 41 is changed through the air blowing drive section 286. When a large variation in the thickness of the web W in the width direction occurs, the speed of the airflow generated by the air blowing section 41, that is, the volumetric flow rate can be adjusted to reduce the variation.

The input section 281 receives a user setting including the volumetric flow rate which is a state of the air blowing section 41. An operator of the sheet manufacturing apparatus 1 can optionally change the volumetric flow rate of the air blowing section 41 through the input section 281. The volumetric flow rate of the airflow generated by the air blowing section 41 is less than a suction flow rate of the suction mechanism 110. The volumetric flow rate is not particularly limited, and is changed, for example, in a range of 18 m³/min to 23 m³/min.

The storage section 284 includes a read only memory (ROM) and a random access memory (RAM) (not shown). Various control programs and the like executed by the operation section 283 are stored in the ROM. Data is temporarily stored in the RAM. The storage section 284 stores data including the user setting related to the volumetric flow rate and the like, the accumulation state of the web W measured by the five sensor sections 285, and the state of the air blowing section 41.

The operation section 283 is a central processing unit (CPU), and controls the entire sheet manufacturing apparatus 1. In particular, the operation section 283 operates the data stored in the storage section 284 to give an instruction to change the volumetric flow rate of the air blowing section 41.

The display section 282 displays the data and notifies the operator of the data. The display section 282 is a liquid crystal display device, and may be a touch panel type display device integrated with the input section 281.

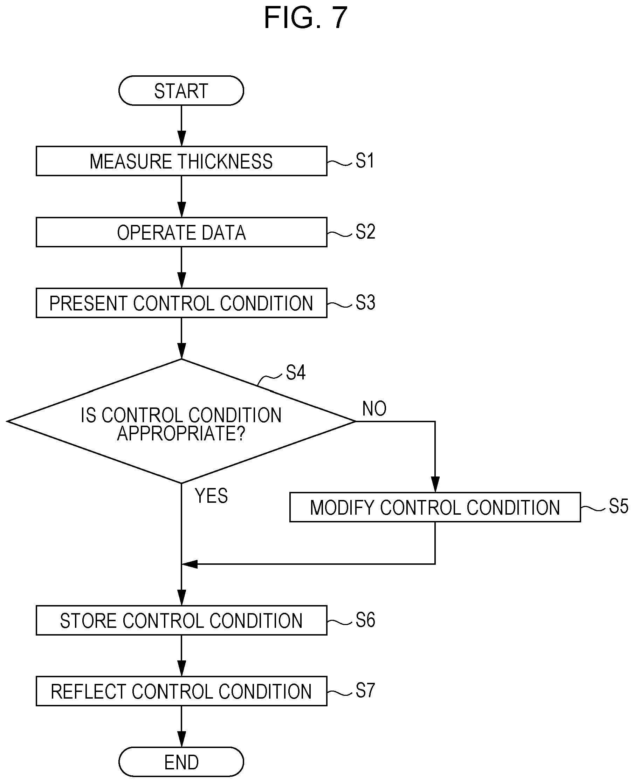

There are roughly two methods of controlling the air blowing section 41 by the control section 28. In the first method, as shown in FIG. 7, the operator determines whether or not a control condition of the air blowing section 41, that is, a set value of the volumetric flow rate is appropriate. The first method includes steps S1 to S7.

In step S1, the thickness of the web W in each region is measured by the five sensor sections 285. The measurement result is transmitted from each sensor section 285 to the operation section 283.

In step S2, the operation section 283 operates the data including the measurement result and the state of the air blowing section 41 in this case. As a result, the volumetric flow rate of the air blowing section 41 for reducing the variation in the thickness of the web W is analyzed and calculated. The derived and recommended control condition of the air blowing section 41 is transmitted from the operation section 283 to the display section 282.

Only in the first case, the data operation in the operation section 283 is performed with reference to a data table stored in the ROM before the sheet manufacturing apparatus 1 is shipped. The second and subsequent data operations are performed with reference to both the data table and the data stored in the RAM after the first time.

In step S3, the display section 282 presents the volumetric flow rate of the air blowing section 41, which is the recommended control condition, to the operator.

In step S4, the operator determines whether or not the recommended control condition is appropriate. When the operator determines that the recommended control condition is appropriate and adopts the control condition, the process proceeds to step S6. When the operator determines that the recommended control condition is not appropriate and modifies the condition, the process proceeds to step S5.

In step S5, the operator inputs the modified control condition from the input section 281. The modified control condition is transmitted from the input section 281 to the storage section 284.

The modified condition in step S5 may be automatically input by a sub-control section. Specifically, the sub-control section is provided in an information terminal, such as a personal computer or a smartphone. The information terminal is coupled to the control section 28 to be able to transmit and receive the information. The sub-control section of the information terminal includes a sub-operation section and a sub-storage section. The sub-storage section learns and stores the control condition, which has been modified and input by the operator in the past, and the display content displayed by the display section 282 of the control section 28. As a result, in step S5, the sub-control section may determine the modified control condition from the past control condition and the display content, and automatically input the modified control condition to the control section 28 on behalf of the operator.

In step S6, the control condition determined by the operator to be appropriate or the modified control condition is stored in the RAM of the storage section 284.

In step S7, the control condition is reflected, and the air blowing drive section 286 drives the air blowing section 41 to change the volumetric flow rate.

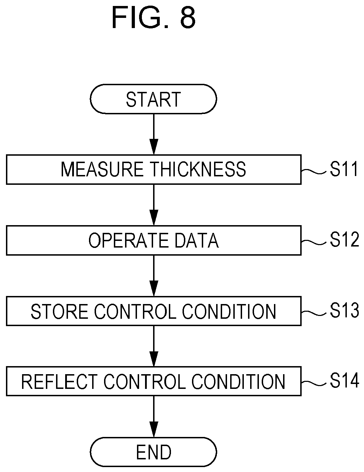

The second method of the methods of controlling the air blowing section 41 by the control section 28 is an automatic mode in which the operator does not determine whether or not the control condition of the volumetric flow rate of the air blowing section 41 is appropriate, as shown in FIG. 8. The second method includes steps S11 to S14.

In step S11, the thickness of the web W in each region is measured by the five sensor sections 285. The measurement result is transmitted from each sensor section 285 to the operation section 283.

In step S12, the operation section 283 operates the data including the measurement result and the state of the air blowing section 41 in this case. As a result, the control condition for reducing the variation in the thickness of the web W is analyzed and calculated.

In this case, only in the first case, the data operation in the operation section 283 is performed with reference to the data table stored in the ROM before the sheet manufacturing apparatus 1 is shipped. The second and subsequent data operations are performed with reference to both the data table and the data stored in the RAM after the first time.

In step S13, the derived control condition is stored in the RAM of the storage section 284. In step S14, the derived control condition is reflected, and the volumetric flow rate of the air blowing section 41 is changed.

The first method and the second method, which are described above, can be selected by the operator. In this way, the air blowing section 41 is controlled by the control section 28.

According to the present embodiment, it is possible to obtain the following effects.

The variation in the thickness of the web W can be reduced. Specifically, by passing through the supply member 42, the movement speed of the mixture is decreased, the movement directions of the mixture are dispersed, and the bias is less likely to occur. As a result, the mixture is relatively uniformly accumulated in the accumulation section 102. That is, the sheet manufacturing apparatus 1 that reduces the variation in the thickness of the web W can be provided.

The rotation speed of the air blowing fan, which is the state of the air blowing section 41, and the like are changed to appropriate conditions according to the user setting and the accumulation state of the mixture. As a result, the movement speed of the mixture is finely adjusted, so that the bias of the accumulated mixture can be further suppressed. Since it is possible to input the user setting with reference to the display of the display section 282, the convenience of a user is improved.

## Claims

1. A sheet manufacturing apparatus comprising:
a supply section that supplies a material containing fibers;
a supply direction change section that changes a movement direction of the material supplied from the supply section;
a reducer section that is disposed downstream of the supply direction change section and decreases a movement speed of the material; and
an accumulation section that is disposed downstream of the reducer section and accumulates the material to form a web.

2. The sheet manufacturing apparatus according to claim 1, wherein
the supply direction change section has a curved portion, and
in an inner surface of the supply direction change section on which the material is moved, a cross-sectional area of a downstream part with respect to the curved portion is 1 time or more and 5 times or less as large as a cross-sectional area of an upstream part with respect to the curved portion.

3. The sheet manufacturing apparatus according to claim 2, wherein
in the supply direction change section, an angle formed by the movement direction in the upstream part and the movement direction in the downstream part is 90° or more.

4. The sheet manufacturing apparatus according to claim 2, wherein
in the supply direction change section, a section length of the upstream part is 6 times or more and 10 times or less as large as a section length of the downstream part.

5. The sheet manufacturing apparatus according to claim 2, wherein
the inner surface of the supply direction change section has a circular shape, and
in the supply direction change section, a distance at which the material is moved from the curved portion is 6 times or more and 10 times or less as large as a diameter of the inner surface.

6. The sheet manufacturing apparatus according to claim 1, further comprising:
a control section, wherein
the control section includes
a sensor section that detects an accumulation state of the fibers in the accumulation section,
an air blowing drive section that drives an air blowing section that transports the material downstream,
an input section that receives a user setting including a state of the air blowing section,
a storage section that stores data including the user setting, the accumulation state, and the state of the air blowing section,
an operation section that operates the data stored in the storage section to give an instruction to change the state of the air blowing section, and
a display section that displays the data.
